# EUROPÄISCHE PATENTSCHRIFT

(11) **EP 1 490 603 B1**
(45) Veröffentlichungstag und Bekanntmachung des Hinweises auf die Patenterteilung: **07.06.2006**
(21) Anmeldenummer: 03718633.5
(22) Anmeldetag: 26.03.2003
(51) Int. Cl.: F16D 21/06

(54) **DOPPELKUPPLUNGSSYSTEM FÜR EIN GETRIEBE, INSBESONDERE FÜR EIN DOPPELKUPPLUNGSGETRIEBE**
TWIN CLUTCH SYSTEM FOR A TRANSMISSION, PARTICULARLY FOR A TWIN CLUTCH TRANSMISSION
SYSTEME A DOUBLE EMBRAYAGE DESTINE A UNE TRANSMISSION, NOTAMMENT A UNE TRANSMISSION A DOUBLE EMBRAYAGE

(30) Priorität: 27.03.2002 DE 10213618; 08.08.2002 DE 10236290
(43) Veröffentlichungstag der Anmeldung: 29.12.2004
(73) Patentinhaber: LuK Lamellen und Kupplungsbau Beteiligungs KG, 77815 Bühl (DE)
(72) Erfinder: AHNERT, Gerd, 77880 Sasbach (DE); POLLAK, Burkhard, 77815 Bühl (DE)
(86) Internationale Anmeldenummer: PCT/DE2003/000994
(87) Internationale Veröffentlichungsnummer: WO 2003/081067

(56) Entgegenhaltungen:
- FR-A- 2 807 481
- FR-A- 2 810 708

## Beschreibung

Die vorliegende Erfindung bezieht sich auf ein Doppelkupplungssystem für ein Getriebe, insbesondere für ein Doppelkupplungsgetriebe, mit zumindest zwei Kupplungen, welche jeweils einen Kupplungsdeckel aufweisen, an denen zumindest ein die Kupplungen betätigendes Ausrücksystem befestigt ist.

Aus der Fahrzeugtechnik sind Getriebe, insbesondere automatisierte Getriebe bekannt. Beispielsweise werden Doppelkupplungsgetriebe bei Fahrzeugen verwendet, um eine Zugkraft unterbrechungsfreie Schaltung zu ermöglichen. Insbesondere derartige Doppelkupplungsgetriebe weisen Doppel- oder Kombikupplungssysteme auf. Ein Doppelkupplungssystem nach dem Oberbegriff des Anspruchs 1 ist aus FR-A-2 810 708 bekannt.

Derartige Doppelkupplungssysteme werden über zumindest ein Ausrücksystem betätigt. Dabei kann jedes Ausrücksystem oder die Lagerung für jede Kupplung an dem Kupplungsdeckel bzw. in der Kupplungsglocke befestigt sein. Dadurch werden die Anforderungen an die Steifigkeit jedes Kupplungsdeckels erhöht, um die auf den jeweiligen Kupplungsdeckel wirkende Kraft aufnehmen zu können. Insbesondere bei der Verwendung einer Schlupfregelung für die Kupplungen ist die deckelfeste Lagerung erforderlich.

Die Aufgabe der vorliegenden Erfindung besteht daher darin, ein Doppelkuplungssystem vorzuschlagen, bei dem insbesondere die mechanische Belastbarkeit der Kupplungsdeckel erhöht wird.

Diese Aufgabe wird erfindungsgemäß durch ein Doppelkupplungssystem für ein Getriebe, insbesondere für ein Doppelkupplungsgetriebe, mit zumindest zwei Kupplungen, welche jeweils einen Kupplungsdeckel aufweisen, an den jeweils zumindest ein die Kupplungen betätigendes Ausrücksystem befestigt ist, und mit einem Befestigungselement, das für die Befestigung der beiden Kupplungsdeckel vorgesehen ist, gelöst, bei dem die beiden Enden des als Bolzen ausgebildeten Befestigungselements mit dem jeweiligen Kupplungsdeckel befestigt sind. Auf diese Weise werden die Kupplungsdeckel des Doppelkupplungssystems miteinander befestigt und somit insgesamt die Steifigkeit bzw. Belastbarkeit erhöht.

Neben der Erhöhung der Steifigkeit für die deckelfeste Lagerung bzw. die Lagerung der Kupplung selbst, ergeben sich auch Vorteile für die Betätigung der Kupplung. Die Verformungen aufgrund der Ausrückkräfte werden reduziert und es ergibt sich insgesamt eine bessere Steuerbarkeit der Kupplungen.

Vorzugsweise können ein oder auch mehrere bolzenförmige Verbindungselement verwendet werden, welche beispielsweise an ihren Enden Aufnahmeabschnitte aufweisen. Bevorzugt können als Aufnahmeabschnitte Ringnuten oder dergleichen verwendet werden. Es ist jedoch auch möglich, andere geeignete Verbindungsmöglichkeiten einzusetzen, um die Belastbarkeit der Kupplungsdeckel zu erhöhen.

Weitere Vorteile und vorteilhafte Ausgestaltungen ergeben sich aus den Unteransprüchen und der nachfolgend beschriebenen Zeichnung.

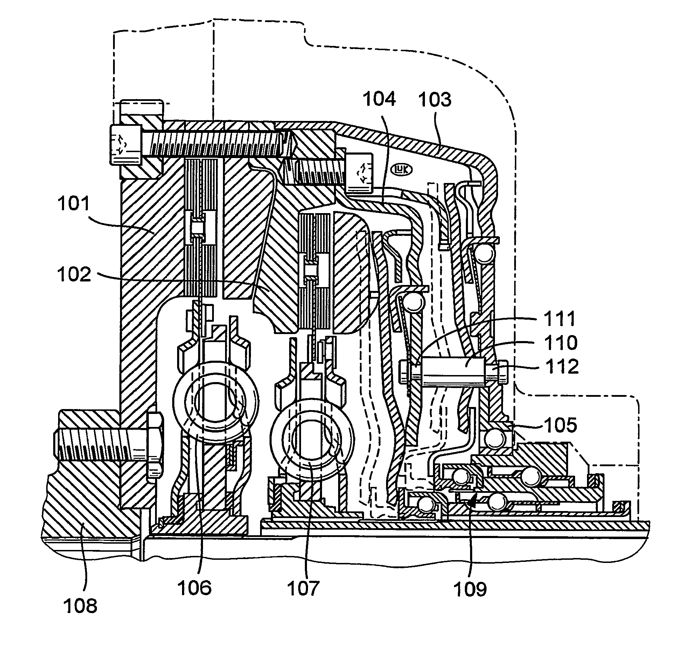

Die einzige Figur der vorliegenden Erfindung zeigt eine geschnittene Teilansicht eines erfindungsgemäßen Doppelkupplungssystems.

Das vorgeschlagene Doppelkupplungssystem ist Teil eines Doppelkupplungsgetriebes, wobei die Doppelkupplung eine erste Kupplung 101 als Anfahrkupplung und eine zweite Kupplung 102 als Lastschaltkupplung umfasst. Die beiden Kupplungen 101, 102 weisen jeweils einen Kupplungsdeckel 103, 104 auf. An dem Kupplungsdeckel 103 ist zusätzlich die Lagerung 105 vorgesehen. Femer sind zwei Torsionsdämpfer 106, 107 für die Kupplungen 101, 102 dargestellt. Darüber hinaus ist ein Teil der Kurbelwelle 108 des Fahrzeuges angedeutet. Die dargestellte Doppelkupplung wird über zumindest ein Ausrücksystem 109 betätigt.

Erfindungsgemäß ist zumindest ein Befestigungsorgan vorgesehen. Bei dem hier gezeigten Ausführungsbeispiel wird als Befestigungsorgan ein bolzenförmiges Verbindungselement 110 verwendet, um den Kupplungsdeckel 103 der Kupplung 101 mit dem Kupplungsdeckel 104 der Kupplung 102 zu verbinden. Zusätzlich sind an den beiden Enden des bolzenförmigen Verbindungselements 110 jeweils Aufnahmeabschnitte vorgesehen. Die Aufnahmeabschnitte sind als Rundnuten 111, 112 ausgebildet, in denen jeweils die Kupplungsdeckel 103, 104 befestigt sind. Auf diese Weise wird die Belastbarkeit der Kupplungsdeckel 103, 104 in vorteilhafter Weise erhöht.

## Patentansprüche

1. Doppelkupplungssystem für ein Getriebe, insbesondere für ein Doppelkupplungsgetriebe, mit zumindest zwei Kupplungen (101, 102), welche jeweils einen Kupplungsdeckel (103, 104) aufweisen, an den jeweils zumindest ein die Kupplungen betätigendes Ausrücksystem befestigt ist, und mit einem Befestigungselement (110), das für die Befestigung der beiden Kupplungsdeckel vorgesehen ist, **dadurch gekennzeichnet, dass** die beiden Enden des als Bolzen ausgebildeten Befestigungselementes (110) mit dem jeweiligen Kupplungsdeckel befestigt sind.

2. Doppelkupplungssystem nach Anspruch 1, **dadurch gekennzeichnet, dass** die beiden Enden des bolzenförmigen Befestigungselements jeweils einen Aufnahmeabschnitt aufweisen.

3. Doppelkupplungssystem nach Anspruch 2, **dadurch gekennzeichnet, dass** jeder Aufnahmeabschnitt als Ringnut ausgebildet ist.

4. Doppelkupplungssystem nach einem der vorangehenden Ansprüche, **dadurch gekennzeichnet, dass** jeder Kupplungsdeckel mit dem Gehäuse des Getriebes befestigt ist.

## Claims

1. A dual clutch system for a transmission, in particular for a dual clutch transmission, having at least two clutches (101.102), each of which has a clutch cover (103, 104) to which at least one disengagement system is attached which operates the clutches, and having an attaching element (110) that is provided to attach the two clutch covers, **characterized in that** the two ends of the attaching element (110) which is designed as a bolt are attached to the respective clutch cover.

2. A dual clutch system according to Claim 1, **characterized in that** the two ends of the bolt-shaped attaching element each have a receiving section.

3. A dual clutch system according to Claim 2, **characterized in that** each receiving section is in the form of an annular groove.

4. A dual clutch system according to one of the preceding claims, **characterized in that** each clutch cover is attached to the housing of the transmission.

## Revendications

1. Système à double embrayage pour une boîte de vitesses, en particulier pour une boîte de vitesses à double embrayage, comprenant au moins deux embrayages (101, 102) qui présentent respectivement un plateau de fermeture d'embrayage (103, 104) sur lequel est fixé respectivement au moins un système de débrayage actionnant les embrayages, et comprenant un élément de fixation (110) qui est prévu pour la fixation des deux plateaux de fermeture d'embrayage, **caractérisé en ce que** les deux extrémités de l'élément de fixation (110) conçu comme un boulon sont fixées avec le plateau de fermeture d'embrayage respectif.

2. Système à double embrayage selon la revendication 1, **caractérisé en ce que** les deux extrémités de l'élément de fixation en forme de boulon présentent respectivement une partie de logement.

3. Système à double embrayage selon la revendication 2, **caractérisé en ce que** chaque partie de logement est conçue comme une rainure annulaire.

4. Système à double embrayage selon l'une quelconque des revendications précédentes, **caractérisé en ce que** chaque plateau de fermeture d'embrayage est fixé avec le carter de la boîte de vitesses.
